# EUROPEAN PATENT SPECIFICATION

(11) **EP 3 432 509 B1**
(45) Date of publication and mention of the grant of the patent: **09.06.2021**
(21) Application number: 17182658.9
(22) Date of filing: 21.07.2017
(51) Int. Cl.: H04L 9/08

(54) **QUANTUM ENHANCED APPLICATION SECURITY**
QUANTENVERBESSERTE ANWENDUNGSSICHERHEIT
SÉCURITÉ D'APPLICATION AMÉLIORÉE QUANTIQUE

(43) Date of publication of application: 23.01.2019
(73) Proprietor: ID Quantique S.A., 1227 Carouge (CH)
(72) Inventor: OUAFI, Khaled, 1006 Lausanne (CH)
(74) Representative: Kraus & Weisert Patentanwälte PartGmbB

(56) References cited:
- US-A1- 2014 304 500
- "Use Cases;Draft ETSI GSQKD 002", ETSI DRAFT; DRAFT ETSI GSQKD 002, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - QKD, no. V<0.0.1>, 21 June 2010 (2010-06-21), pages 1-40, XP014242269,
- TOSHIBA: "Discussion on REST API for QKD key delivery", ETSI DRAFT; QKD(17)022016, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG - QKD - Quantum Key Distribution 8 June 2017 (2017-06-08), pages 1-36, XP014295788, Retrieved from the Internet: URL:docbox.etsi.org\ISG\QKD\05-CONTRIBUTIO NS\2017\QKD(17)022016_Discussion_on_REST_A PI_for_QKD_key_delivery.pdf [retrieved on 2017-06-08]

## Description

The present invention generally relates to the field of encryption technology. More specifically, the invention relates to a quantum key distribution system allowing an application in a network node to exchange key information with the quantum key distribution system. Moreover the invention relates to a method for controlling the operation of the quantum key distribution system and/or the operation of the network node. Additionally the invention relates to a new implementation of a network application allowing the network to operate with the quantum key distribution system as well as with legacy devices. Furthermore the invention relates to an improved communication protocol.

### Prior art

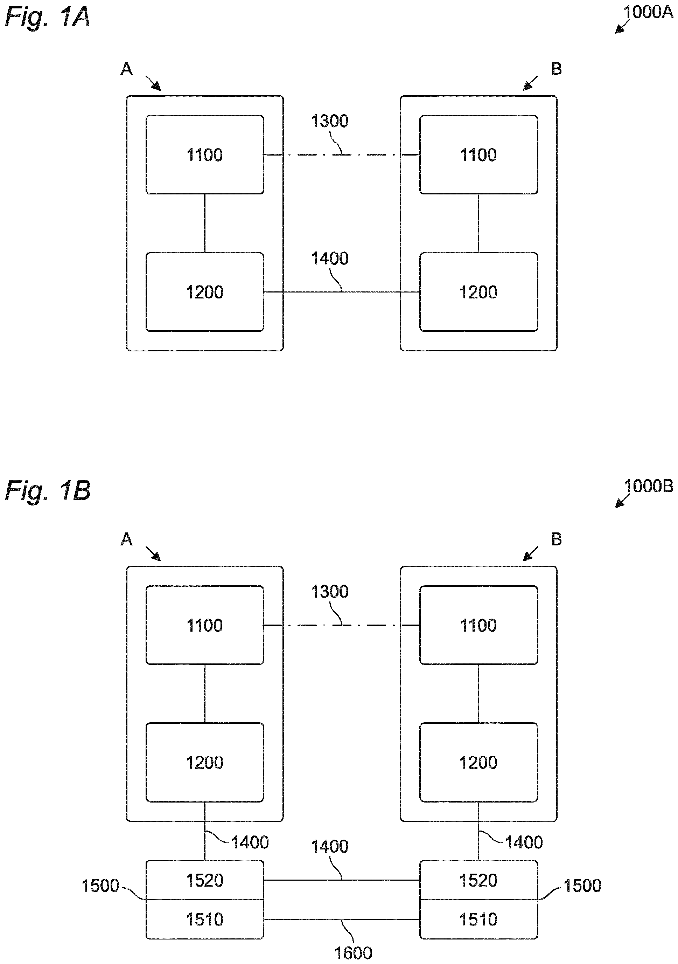

The use of encryption for transmission of data over networks is becoming more and more important. Figure 1A schematically illustrates a network 1000A comprising two nodes A and B for transmitting encrypted information according to the prior art.

Each of nodes A and B comprises different logical layers according to the Open Systems Interconnection model. In general, the Open Systems Interconnection model defines seven layers. Layers 1 to 3 are generally referred to as media layer while layers 4 to 7 are generally referred to as host layers. In figure 1, one or more upper OSI layer 1100 and one or more lower OSI layer 1200 are illustrated. It will be clear that the upper OSI layer 1100 can comprise one or more of the higher OSI layers, such as layers 4 to 7, while the lower OSI layer 1200 can comprise one or more of the lower OSI layers, such as layers 1 to 3.

Within each node A and B, the upper OSI layer 1100 is connected to the lower OSI layer 1200 either physically or logically. The lower OSI layer 1200 of node A is connected, by means of a physical channel 1400 to the lower OSI layer 1200 of node B. At the same time, the upper OSI layer 1100 of node A is capable of exchanging information with the upper OSI layer 1100 of node B. This is schematically illustrated by the logical channel 1300.

When node A and node B intend to exchange encrypted information over physical channel 1400 the encryption can be achieved at any OSI layer within each node. However, the receiving node must be capable of decrypting the encrypted information and must therefore be provided with the unencrypted encryption key, when setting up the encrypted communication. The exchange of the unencrypted encryption key over physical channel 1400 puts the entire encrypted communication at risk. In fact, should an eavesdropper have access to the physical channel 1400, it will be possible to pick up the unencrypted encryption key and thereby decrypt all the subsequent encrypted communication exchanged on the physical channel 1400.

In order to mitigate this problem, it is possible to exchange the unencrypted encryption key by means other than the physical channel 1400. For instance, the unencrypted encryption key could be exchanged in person or by mailing it to the receiving node. Such key exchange mechanisms are however cumbersome and highly time-consuming. In applications requiring a new encryption key to be periodically generated for increasing the safety of the encrypted exchange, the solution cannot be implemented.

Figure 1B schematically illustrates a network 1000B according to the prior art in which a solution to the above problem is implemented. In particular, in figure 1B a quantum encryption device 1500 is connected to each of nodes A and B. Even more specifically, the quantum encryption device 1500 communicates with the lower OSI layer 1200 of each of nodes A and B. Moreover, the quantum encryption devices 1500 are capable of communicating to each other via a physical quantum channel 1600. The physical quantum channel 1600 allows the exchange of an encryption key over a channel having quantum characteristics. In particular, the quantum encryption device 1500 comprises a quantum key distribution system 1510 and an encryption engine 1520. The quantum key distribution system 1510 is connected to the physical quantum channel 1600 and operates in order to exchange the encryption key over the physical quantum channel 1600. The encryption engine 1520 encrypts and decrypts the data from physical channel 1400 based on the encryption key provided by the quantum key distribution system 1510.

More particularly, the security of this method comes from the fact that the measurement of a quantum state of an unknown quantum system modifies the system itself. In other words, someone eavesdropping on a quantum communication channel cannot get information on the key without introducing errors in the key exchanged between the emitter and the receiver, thereby informing the user of an eavesdropping attempt.

The quantum encryption devices enable secure transmission of useful payload by performing some kind of symmetric encryption using the keys exchanged by the quantum key distribution system 1510. Specific systems are described for instance in US 5,307,410 to Bennett, and in the article by C. H. Bennett entitled "Quantum Cryptography Using Any Two Non-Orthogonal States", Phys. Rev. Lett. 68, 3121 (1992). A survey of the bases and methods as well as the historical development of quantum cryptography is contained in the articles by N. Gisin, G. Ribordy, W. Tittel and H. Zbinden, "Quantum Cryptography", Reviews of Modem Physics. 74, (2002).

In general, the physical quantum channel 1600 allows an increased security on the exchange of the encryption key since any action of an eavesdropper can be detected by the quantum encryption devices 1500. It is therefore impossible for an eavesdropper to gain access to the encryption key without being noticed.

In the specifically illustrated embodiment, the quantum encryption devices 1500 are inserted along the physical channel 1400. In this respect, each of the quantum encryption device 1500 can also be capable of encrypting the data received by the lower OSI layer 1200 of each of nodes A and B. The solution is usually preferred since it allows each of nodes A and B to operate without any change while leaving the entire encryption and decryption operation to the quantum encryption devices 1500.Commercially available quantum encryption devices implementing operation at the OSI layer 2 are available, such as Cerberis, Clavis2, Clavis3 by ID Quantique, QPN 5505, QPN 7505, and QPN 5006 by MagiQTechnologies, or TREL by Toshiba Research Lab.

Recently, there has been a search for extending the operation of such quantum encryption devices, in particular interfacing them directly with the OSI layer 3, in particular for Internet related applications.

Today's internet encrypted traffic is handled by commodity security protocols, whose standard examples are IPSec or Internet Protocol security, Transport Layer Security, and DTransport Layer Security or Datagram Transport Layer Security. IPSec is designed to support the secure exchange of information over the Internet, and more specifically, the exchange of packets at the IP layer. On the other hand, Transport Layer Security, and its predecessor SSL or Secure Sockets Layer, resort to reliable transport protocol, such as TCP, while DTransport Layer Security is an adaptation of Transport Layer Security to UDP channels. Within these security protocols, the key exchange is based on public-key cryptography and Diffie-Hellman key agreement.

The latter are examples of classical cryptography methods, which, contrarily to the operation of a quantum encryption device, rely on problems with high computational complexities with respect to deterministic Turing machines. Therefore, these algorithms might become insecure due to the potential advent of quantum computers, or the technological advancement in deterministic PCs. It follows, for that reason, the necessity of introducing the intrinsically secure quantum encryption device.

IPSec is a OSI layer 3 protocol, and its low key rate has been improved by introducing a quantum encryption distributor, as described in US. Pat. No. 7602919B2. As a general idea, the IPSec key generation with SA key flipping, achieving approximately 1 key/s, is boosted to the frequency of quantum encryption key generation, achieving approximately 100 key/s, and consequently enhancing the security of Internet-data communication. The generation of n distinct SAs is obtained from one classical SA and n quantum keys. The n additional SA are generated by combing, for instance by XOR-ing, the normally established SA content with n quantum keys. Moreover, the implementation of a quantum encryption distributor into IPSec has also allowed to enhance the IP security as disclosed in US. Pat. No 8559640. This document proposes an integration of a quantum key distribution within the Phase 1 and Phase 2 of the IKE protocol.In Phase 1, the quantum-shared secret of a quantum key distribution database, which is simultaneously pointed by an initiator and a responder, is used in combination, for instance by XOR-ing, with the existing Diffie-Hellman shared secret to generate keys for encryption (SKEYID_e) and authentication (SKEYID_a). In Phase 2, the initiator and the responder both have N quantum-shared secrets, which are employed to generate the keys used in each SA to encrypt and decrypt the transmitted data.

With regards to Layer 3 protocols, such as IP Sec, the quantum key distribution is not integrated in the negotiation phase, it thus prevents the server from deciding if performing or not the combination, for instance by XOR-ing, of classical and quantum keys.

A problematic still unsolved is a protocol or an application integrating the quantum key distribution at an OSI layer higher than 4, for instance OSI layer 6, with applications such as the Transport Layer Security protocol. The result of this integration is a quantum enhanced application security, which introduces several levels of security, or security policies.

The possibility to exploit quantum key distribution at higher OSI layers, such as layer 6, has high practical impacts. This is particularly valid with reference to the Transport Layer Security protocol, since Transport Layer Security is one of the main protocol adopted for providing security functionalities such as authentication, confidentiality and integrity to internet and extensively used web applications, such as HTTP, IMAP, POP, XMPP.

Currently existing attempts of integrating quantum key distribution into Transport Layer Security/SSL are aimed at fully replacing the classic encryption algorithms, such as Diffie-Hellman or RSA, by the quantum key distribution. An example of full integration of quantum key distribution into Transport Layer Security can be found in the paper by M. Elboukhlari et al., International Journal of Computer Science and Network Security, 9, 12 (2009), where quantum key distribution is integrated in the Transport Layer Security protocol for LAN environments.

This paper shows the possibility of developing a quantum version of the Transport Layer Security Handshake Protocol, where the key exchange is performed by the BB84 quantum key distribution protocol instead of common RSA and/or Diffie-Hellman algorithms. The proposed solution employs an online quantum key distribution system, which consequently has to face scalability issues. In fact, the online quantum key distribution generation, in a protocol such as Transport Layer Security, requires the supply of ad hoc devices between each client and the server. Consequently, imposing limits on the number of possible clients. Additionally, the real time request of quantum key generation is limited to a number of users such that it prevents the quantum key distribution system from crashing. Apart from these scalability issues, this solution does not guarantee multiple security levels, since the support of classic generated keys is removed. In addition, this solution requires a supplementary component consisting of a quantum key distribution configuration protocol, which is aimed at configuring the quantum key distribution sub-network. This further complicates the implementation of this solution.

An example of full implementation of quantum key distribution into SSL has been proposed in S. Faraj, Special Issue of Ubiquitous Computing Security systems. In this paper, a quantum version of the SSL handshake protocol, named QSSL, is shown. Two new cipher suites have been defined in order to use QSSL. Despite the use of classical methods, such as RSA or Diffie-Hellman, for the initialization of the channel, the key exchange is exclusively assigned to the quantum key distribution.

With current techniques, it is therefore not possible to integrate the quantum key distribution with Transport Layer Security while providing full backward compatibility with classical deployments of Transport Layer Security. That is, existing solutions force the implementation to either be quantum key distribution compatible or to follow classical implementations.

Furthermore, this also imposes the same security policy to be applicable to all communicating parties. In other words, it is not possible to decide whether to use quantum key distribution or not depending on applications-bound context information. For instance, there are cases in applications for which it is valuable to add more layers of security either for certain users, such as an administrator or a high privileged user, or for a certain period of time such as during a cyber-attack.

Furthermore, the quantum key distribution is usually achieved online, consequently imposing scalability issues. Further none of the prior art discloses an implementation compatible at higher OSI layers, such as at OSI layer 6.

There is therefore a need for an offline integration of a quantum key distribution, which provides backward compatibility with legacy devices and potentially advantageously enables more layers of security.

Systems for the exchange of QKD keys are known, for instance, from document - "Use Cases;Draft ETSI GSQKD 002", ETSI DRAFT; DRAFT ETSI GSQKD 002, EUROPEAN TELECOMMUNICATIONS STANDARDS INSTITUTE (ETSI), 650, ROUTE DES LUCIOLES ; F-06921 SOPHIA-ANTIPOLIS ; FRANCE, (20100621), vol. ISG - QKD, no. V<0.0.1>, pages 1 -40, XP014242269 and document TOSHIBA, "Discussion on REST API for QKD key delivery", vol. ISG - QKD - Quantum Key Distribution, (20170608), pages 1 - 36, ETSI DRAFT; QKD(17)022016, EUROPEAN TELECOMMUNICATIONS STANDARDS INSTITUTE (ETSI), 650, ROUTE DES LUCIOLES ; F-06921 SOPHIA-ANTIPOLIS ; FRANCE.

Moreover, document US 2014/304500 A1 discloses a Fiber Coaxial Unit (FCU) comprising an optical interface configured to couple to an Optical Line Terminal (OLT) via a PON, a processor coupled to the optical interface, an electrical interface coupled to the processor and configured to couple to the Coaxial Network Unit (CNU) via an Ethernet PON over coaxial (EPoC) network, and forward a plurality of encrypted security keys to the CNU via the EPoC

### Summary of the invention

It is the general approach of the invention to recognize that the quantum key distribution can be integrated with applications running at OSI layers higher than 4 without recurring to an online quantum key distribution approach. In some embodiment of the invention, quantum key distribution can be integrated within the Transport Layer Security protocol. In some more specific embodiments, in particular, with Transport Layer Security protocol version 1.3.

Embodiments of the invention are defined by the independent claims.

In some aspects the Transport Layer Security protocol exhibits a built-in possibility to combine several encryption keys, for the communication between a server and a client, to design an integration mechanism for a quantum encryption key into classical encryption key, for instance a pre-shared key and/or a Diffie-Hellman encryption.

In some aspects the quantum key can be obtained through a quantum key distribution process including key sifting and privacy amplification and securely stored in a database that associates the keys with the link from which they were obtained. Moreover, the database can also maintain a mapping from peer to link that associates each participating node to the quantum key distribution link that connects the two actors. At last, each node, and in particular the client and the server, have access to a secure communication channel to the database. This provides an enhanced security at the application level by integrating the quantum key distribution into Transport Layer Security with full compatibility with already existing deployments of the protocol.

In some aspects, several layers of security can be introduced in the communication between the client and the server. In fact, if the client does not meet the security requirements, the server may decide to interrupt the communication. This may be established at run time by the server.

In some aspects the quantum key can be calculated off-line, can be securely stored in a database preventing from latency, which represents a typical disadvantage of the prior art. The quantum key can subsequently be combined with a classic key. The combination can advantageously be performed if the client exposes its ability to perform quantum key distribution-augmented security and the server identifies necessity for higher level security for the given certain client.

In some aspects, being orthogonal to the chosen ciphers, the combination of the quantum and classical keys is achieved by extending values offered by the psk-key-exchange-modes parameter of the Transport Layer Security1.3 protocol and eventually adding a new extension for transporting key identifiers. Such enhancements guarantee full backward compatibility with standard versions of the Transport Layer Security protocol.

A quantum key distribution system can be provided comprising: a controller, a memory connected to the controller, a physical port connected to the controller, a physical quantum port connected to the controller, wherein the physical port ban be configured to be connected through a physical channel to one lower OSI layer of at least one node in a network, and wherein the controller can be configured to establish a logical channel with an application in at least one upper OSI layer of the least one node.

In some aspects, the controller can be configured to exchange information related to at least one encryption key with the application.

In some aspects, the information can comprise a key identifier which identifies an encryption key stored in the memory.

In some aspects, the upper OSI layer can comprise one or more of OSI layers 4 to 7, preferably one or more of OSI layers 5 to 7, more preferably one or more of OSI layers 6 and 7.

In some aspects, the application can comprise Transport Layer Security protocol.

In some aspects, the controller can be further configured to authenticate connected nodes A, B, C and manage their enrolment status.

Moreover, an encrypted channel establishment method for establishing an encrypted channel between a first node and a second node in a network can be provided comprising the steps of: exchanging at least one first encryption key over a quantum physical channel by a first quantum key distribution system connected to the first node and by a second quantum key distribution system connected to the second node, exchanging key information between the first node and the second node, wherein the key information at least identifies the at least one first encryption key, deciding at the second node what level of encryption to use for the encrypted channel among at least a first encryption level, based on the first encryption key, and a second encryption level, not based on the first encryption key.

In some aspects, if, at the deciding step, the second node decides to use the second encryption level, the encrypted channel can be established based on a second encryption key exchanged over a physical channel not having quantum-safe characteristics.

In some aspects, if, at the deciding step, the second node decides to use the first encryption level, the encrypted channel can be established based on the at least first encryption key.

In some aspects, the step of exchanging the key information can comprise exchanging the key information between the first quantum key distribution system and the first node by an application running in at least one upper OSI layer of the first node.

In some aspects, the upper OSI layer can comprise one or more of OSI layers 4 to 7, preferably one or more of OSI layers 5 to 7, more preferably one or more of OSI layers 6 and 7.

In some aspects, the application can comprise Transport Layer Security protocol.

In some aspects, the encrypted channel establishment method can further comprise the steps of mapping the key information at the second node by mapping the key information against at least one third encryption key stored in the second quantum key distribution system.

Moreover, a TLS protocol for establishing an encrypted channel between a first node and a second node in a network can be provided, wherein the field psk_key_exchange_modes of the TLS protocol comprises more than two possible values, preferably more than three possible values, even more preferably more than four possible values, still more preferably six possible values.

In some aspects, the TLS protocol can further comprising a field for transmitting quantum encryption keys identifiers.

### Brief description of the drawings

Figure 1A schematically illustrates a network 1000A for transmitting encrypted information according to the prior art,
Figure 1B schematically illustrates a network 1000B for quantum key distribution according to the prior art,
Figure 2 schematically illustrates a network 2000 comprising a quantum key distribution system 2510 according to an embodiment of the invention,
Figure 3 schematically illustrates a network 3000 comprising a quantum key distribution system 2510 according to an embodiment of the invention,
Figure 4 schematically illustrates a quantum key distribution system 4510 according to an embodiment of the invention,
Figure 5 schematically illustrates a quantum key distribution method 5000 according to an embodiment of the invention.

### Description of preferred embodiments

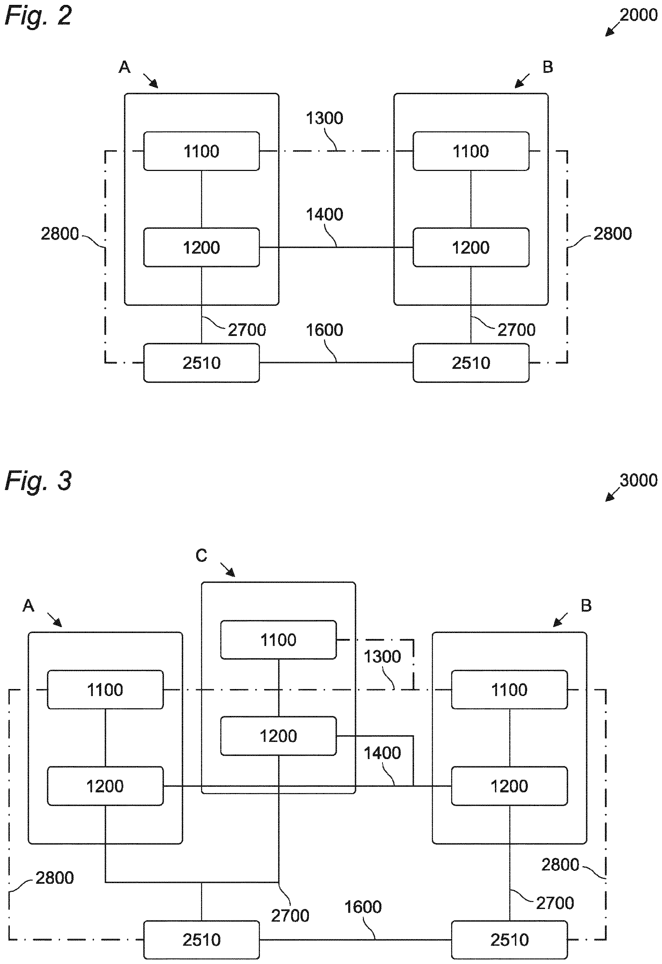

Figure 2 schematically illustrates a network 2000 comprising a quantum key distribution system 2510according to an embodiment of the invention.

The quantum key distribution system 2510 is configured to be connected through a physical channel 2700 to one lower OSI layer 1200of at least one node A, B, C in the network 2000, 3000. For instance, the physical channel 2700 could be an Ethernet connection, a WiFi connection, a LAN network, a USB connection or, more in general, any kind of physical channel which allows exchange of data between the quantum key distribution system 2510 and the node A, B or C. The physical channel 2700 can also be secure channel which integrates a symmetric key agreement or a quantum-resistant, i.e., post-quantum, public-key agreement.

The quantum key distribution system 2510 is connected by means of a physical quantum channel 1600 to one or more other quantum key distribution systems 2510. In this manner, it is possible for the quantum key distribution systems 2510 to exchange encryption keys over the physical quantum channel 1600 thereby obtaining the known advantages associated with the increase the security of the physical quantum channel 1600. By physically connecting the quantum key distribution system 2510 to the node A, B, it is possible for the quantum key distribution system 2510 and the node A, B to quickly exchange information related to the keys distributed by the quantum key distribution system 2510.

Furthermore, the quantum key distribution system 2510is configured so as to establish a logical channel 2800 with an application in at least one upper OSI layer 1100 of the least one node A, B. The establishment of a logical channel 2800 can be achieved in several different ways might providing within the quantum key distribution system 2510 a controller capable of running applications which are capable of contacting other applications in the at least one upper OSI layer 1100 of the node A, B. This could be achieved, for instance, by providing the quantum key distribution system 2510 with a microcontroller or a microprocessor capable of running applications having the ability of establishing a logical channel 2800 with the at least one upper OSI layer 1100.

The logical channel 2800 is illustrated as being logically achieved between the quantum key distribution system 2510 and the upper OSI layer 1100. It will, however, be clear that such logical channel may be achieved by providing a logical channel which also goes through the lower OSI layer 1200. Further, it will be clear that the logical channel 2800 should not be interpreted as a physical communication channel, such as a wire or as a radio connection. To the contrary, the logical channel 2800 should be understood so as to mean that a communication between the upper OSI layer 1100 and the quantum key distribution system 2510 can be achieved at the OSI level of the upper OSI layer 1100.

In some embodiments, the quantum key distribution system 2510is configured to exchange information related to at least one encryption key with the application. The information exchanged can, in principle, be any kind of information related to the encryption key distributed by the quantum key distribution system 2510. In some specific embodiments, the information may actually be the encryption key itself. This is particularly useful in those embodiments in which the encryption function is achieved by the node A, B and the quantum key distribution system 2510 only provide a functionality for exchanging the quantum key among the nodes A, B.

Alternatively, or in addition, the information may be a key identifier, or a key index, that is, data allowing the node A, B to identify and/or select a key stored in the quantum key distribution system 2510 without gaining access to the key itself. This approach may be particularly useful in those cases in which the encryption is not performed by the node A, B but is left to an external device, for instance the quantum key distribution system 2510 and/or any encryption device which can receive the key stored in the quantum key distribution system 2510.

In some embodiments, the upper OSI layer can comprise one or more of OSI layers 4 to 7, preferably one or more of OSI layers 5 to 7, more preferably one or more of OSI layers 6 and 7.

This advantageously allows the quantum key distribution system 2510 to operate and exchange data with the upper OSI layer 1100 at the OSI layers 4 to 7, preferably one or more of OSI layers 5 to 7, more preferably one or more of OSI layers 6 and 7. That is particularly advantageous since the applications running at those OSI layers can then directly communicate with the quantum key distribution system 2510 in order to gain access to the information related to the encryption keys stored in the quantum key distribution system 2510.

Further, in some embodiments, the application can comprise a Transport Layer Security protocol. That is particularly advantageous as it allows the Transport Layer Security protocol to directly communicate with the quantum key distribution system 2510 in order to implement the exchange of encryption keys over the physical quantum channel 1600.

Figure 3 schematically illustrates a network 3000 comprising the quantum key distribution system 2510. In particular, figure 3 further illustrates a further advantage of the quantum key distribution system 2510 in accordance with an embodiment of the present invention. More specifically, as can be seen in figure 3, the quantum key distribution system 2510 can be connected by means of the physical channel 2700 to a plurality of nodes A, C.

As previously described, the physical channel 2510 can be implemented in a number of known manners. It will be clear to the skilled person how the previously described physical channels can allow the quantum key distribution system 2510 to be connected to a plurality of lower OSI layers 1200. It will further be clear that the physical connection 2700 is only schematically representing the connection between the quantum key distribution system 2510 and the lower OSI layers 1200. In particular, although the embodiment illustrated in figure 3 schematically represents a star connection, it will be possible to have any type of physical connection between the various elements, such as a ring, a mesh, a line, bus connections, etc. it will further be possible to provide a plurality of connecting elements between the quantum key distribution system 2510 and the lower OSI layers 1200, such as hubs, routers, repeaters, splitters, etc.

This is particularly advantageous as it allows a single quantum key distribution system 2510 to be physically connected to a number of nodes A, C, which share the operation of the quantum key distribution system 2510. As will be described later, since each node is capable of communicating on a logical channel with the quantum key distribution system 2510 thereby retrieving only those keys which are needed for its own operation, the nodes can establish different encrypted channels 1300 based on different encryption keys. That is, for instance, while in figure 3 a single logical channel 1300 is illustrated between nodes A, B and C, the present invention is not limited thereto. For instance nodes A and B could communicate on a logical level through a first logical channel 1300 while nodes C and B could communicate on a logical level through a second logical channel 1300, independently established, and/or managed, and/or encrypted with respect to the first logical channel 1300.

It will be clear that the possibility for the quantum key distribution system 2510 to establish a logical channel with the nodes A, B, and C, in particular with an application running at a higher OSI level of those nodes, preferably with an application involved in the establishment established, and/or management, and/or encryption of the logical channel 1300, even more preferably with a TLS application, allows those advantages which cannot be obtained by the known quantum key distribution system 1510.

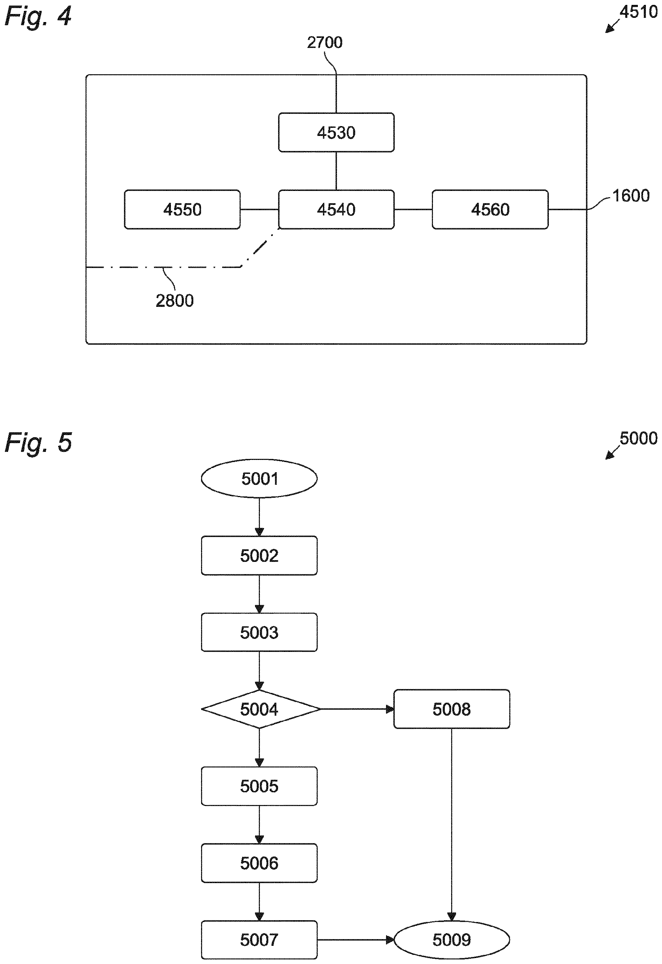

Figure 4 schematically illustrates a quantum key distribution system 4510 according to an embodiment of the invention. In particular, the quantum key distribution system 4510comprises a controller 4540,a memory 4550 connected to the controller 4540,a physical port 4530 connected to the controller 4540, and a physical quantum port 4560 connected to the controller 4540.

The controller 4540 is generally configured so as to have the capability of running a software stored in a memory, for instance memory 4550. In particular, the controller 4540 is capable of running software allowing it to communicate with the upper OSI layer 1200 of nodes A, B, C. Moreover, the controller 4540 can be configured so as to authenticate connected nodes A, B, C and manage their enrolment status. In other words, controller 4540, can be aware of what nodes A, B, C are connected to the quantum key distribution system 4510, for instance by means of a network setup and/or by means of an initial authentication of the nodes A, B, C on the quantum key distribution system 4510, or viceversa. Controller 4540 can further be configured so that only those nodes A, B, and C which have been authenticated can request and/or retrieve encryption keys from the quantum key distribution system 4510.

In some embodiments, the authentication can result in the key distribution system 2510, 4510 comprising identification information identifying the authenticated nodes A, B, C. This information can, for instance, be saved in memory 4550. It will be clear that several possible authentication approaches are possible. Any authentication method can be implemented, as long as the key distribution system 2510, 4510 is thereafter capable of knowing which nodes A, B, C can request key identifiers and/or encryption keys. In some embodiments, the authentication can be carried out at the same OSI levels at which the logical channel 2800 is established. Alternatively, or in addition, the authentication can be carried out by the application described above.

The memory 4550 is configured so as to store information related to at least one encryption key to be used by the node A, B, C. In this manner, it is possible for the controller 4542 axis the memory 4550 and exchange with the node A, B, C the information related to the at least one encryption key. The memory 4550 can be implemented as a symmetric tamper-proof database storing encryption keys. The keys can have a predefined length such as, for instance, 128 bits.

The physical port 4530 is connected to the controller 4540 and allows communication over the physical channel 2700. It will be clear to those skilled in the art that the appropriate physical port 4530 can be selected depending on the specific implementation of the physical channel 2700, as described above. Thus, the physical port 4530 allows a connection to the lower OSI layer 1200 of at least one node A, B, C through the physical channel 2700.

The physical quantum port 4560 is connected to the controller 4540 and allows exchange of encryption keys over the physical quantum channel 1600. Also in this case, the physical quantum port 4560 will be selected depending on the specific configuration of the physical quantum channel 1600.

The controller 4540 is further configured to establish the logical channel 2800 with an application in at least one upper OSI layer 1100 of the least one node A, B, C, as described above.

Figure 5 schematically illustrates an encrypted channel establishment method 5000 according to an embodiment of the invention. The encrypted channel establishment method 5000 can be implemented by using the quantum key distribution system 2510 or 4510. However, the present invention is not limited thereto and the encrypted channel establishment method 5000 can also be implemented by means of other devices suitably configured for the implementation thereof.

The encrypted channel establishment method 5000 generally applies to those cases in which any to nodes want to communicate over an encrypted channel. This can be the case, for instance, of any node A, B, C wanting to communicate with any other node A, B, C within the network 2000, 3000.

Here, the establishment of the encrypted channel can be achieved by a known manner, such as exchanging the encryption key over the physical channel 1400, as described with reference to figure 1A. Moreover, in some embodiments, the establishment of the encrypted channel can be achieved by exchanging the encryption key over the physical quantum channel 1600 as described with reference to figures 2, 3 and 4.

In some embodiments, the encrypted channel establishment method 5000 is configured for establishing an encrypted channel between a first node A and a second node B in a network 2000, 3000 and comprises the step of exchanging 5002 at least one first encryption key over a quantum physical channel 1600 by a first quantum key distribution system 2510, 4510 connected to the first node A and by a second quantum key distribution system 2510, 4510 connected to the second node B.

Thanks to the step, the first quantum key distribution system 2510, 4510 and the second quantum key distribution system 2510, 4510 can therefore exchange encryption keys in a quantum-safe manner as described above. It should be noted that not necessarily all encryption keys which are stored in the first quantum key distribution system 2510, 4510 are shared with the second quantum key distribution system 2510, 4510. In particular, for the operation of the method 5000, it is sufficient that at least one encryption key is shared between the first quantum key distribution system 2510, 4510 and the second quantum key distribution system 2510, 4510.

Moreover, it is possible that in the network 2000, 3000, a high number of quantum key distribution system 2510, 4510 will be present.

Moreover, the method 5000 can also comprise an exchanging step 5003 for exchanging key information between the first node A and the second node B. As described above, the key information is any kind of information which allows to identify the at least one first encryption key. In other words, this step allows the first node A and the second node B to identify an encryption key stored in the respective quantum key distribution system 2510, 4510 without having to exchange the encryption key over a physical channel 1400 not having quantum-safe properties. To the contrary, only the key information is exchanged over the physical channel 1400. Thus, even if a potential eavesdropper could access the key information, it would still not be possible to decrypt the subsequent data encrypted based on the encryption key, as only the first node A and the second node B can access the encryption key which has been safely exchanged by the quantum key distribution systems 2510, 4510.

In some embodiments, the node A, B, C intending to securely communicate with another node A, B, C can implement the exchanging step 50003 by a first sub-step in which the node A, B, C contacts the respective quantum key distribution system 2510, 4510 to retrieve one or more encryption keys therefrom. In some embodiments, the list of keys retrieved form the quantum key distribution system may be limited by providing the quantum key distribution system with an address of the node to which communication is intended. Here the quantum key distribution system 2510, 4510 may be aware, by communication with the other quantum key distribution system 2510, 4510 in the network, of which key are available to the intended destination node and may therefore provide only those keys to the requesting node. In a second sub-step, the quantum key distribution system 2510, 4510 may then respond the request and provide the requesting node with a list of identifications of the quantum keys, eventually limited to those quantum keys available at the destination node as described. In a third sub-step, the contacting node sends the retrieved list of identifications of the quantum keys, preferably as part of the qkd-pre-shared-key which will be described below, along with the appropriate psk-key-exchange-mode.

Moreover, the method 5000 can also comprise a deciding step5004 at the second node B which decides what level of encryption to use for the encrypted channel, among at least a first encryption level, based on the first encryption key, and a second encryption level, not based on the first encryption key. In other words, the second node B is capable of selecting whether to implement an encryption channel based on the first encryption key, exchanged by means of the quantum key distribution systems 2510, 4510, or based on another encryption approach.

This allows implementation of the method 5000 within a network wherein not all of the nodes A, B and C are connected to a quantum key distribution system 2510, 4510 and/or are configured so as to cooperate with the quantum key distribution systems 2510, 4510. In other words, the deciding step 5004 advantageously allows implementing the method 5000 within a network also comprising legacy devices.

Still further, the deciding step 5004 advantageously allows implementing several levels of encryption also for those nodes A, B, C which to implement an exchange of quantum encryption keys by means of the quantum key distribution systems 2510, 4510. For instance, in some cases, the node B may decide that the information to be transmitted does not require the higher level of security which can be achieved by establishing an encryption channel based on the first encryption key, exchanged by means of the quantum key distribution systems 2510, 4510. In those cases, the encryption channel may still be established based on another key, for instance exchanged over the physical channel 1400.

Thus, if at the deciding step 5004, the second node B decides to use the second encryption level, the encrypted channel is established in a legacy encryption establishment step 5008, based on a second encryption key, exchanged over the physical channel 1400. Here the physical channel 1400 is any channel not having quantum-safe characteristics. On the other hand, if at the deciding step 5004, the second node B decides to use the first encryption level, the encrypted channel is established based on the at least first encryption key.

In some embodiments, the step 5003 of exchanging the key information comprises exchanging the key information between the first quantum key distribution system 2510, 4510 and the first node A by an application running in at least one upper OSI layer 1100 of the first node A. that is, the key information can be exchanged between the node A, B, C and the quantum key distribution system 2510, 4510 through a logical channel 2800 as described above.

This provides the same beneficial advantage is as described above, in particular, it allows exchanging the key information by means of an application, for instance the Transport Layer Security protocol, over the upper OSI layer which can comprise one or more of OSI layers 4 to 7, preferably one or more of OSI layers 5 to 7, more preferably one or more of OSI layers 6 and 7.

Furthermore, this advantageously allows a single application running on node A to retrieve the key information from the quantum key distribution system 2510, 4510 and exchange of the key information between node A and node B. Therefore, the retrieval of the key information from the quantum key distribution system 2510, 4510 and the subsequent exchange with the other nodes in the network can be advantageously simplified and/or made faster by handling such operations within a single application.

Moreover, the method 5000 can also comprise a mapping step 5005at the second node B for mapping the key information against at least one third encryption key stored in the second quantum key distribution system 2510, 4510. This allows the first node A and the second node B to both be aware of the encryption keys which may be used for establishing an encryption channel. In fact, in some cases, the quantum key distribution system 2510, 4510 of node A and the quantum key distribution system 2510, 4510 of node B can store a plurality of encryption keys, where not all keys of node A are present at node B.

For instance, if the quantum key distribution system 2510, 4510 of node A stores

| Key ID | Encryption key |
|---|---|
| KeyA1 | 128DF7F168GG71 GHJ2FG6H8127HG6DF3812 |
| KeyA2 | 395SD3GF820934KLD0984950359408953DD09 |
| KeyA3 | 9432G8G7934HF87GF5H504G9HOD6t9584098 |

while the quantum key distribution system 2510, 4510 of node B stores

| Key ID | Encryption key |
|---|---|
| KeyA1 | 128DF7F168GG71GHJ2FG6H8127HG6DF3812 |
| KeyA2 | 395SD3GF820934KLD0984950359408953DD09 |
| KeyB3 | 439F8F5798FG4SD37G88SD4G358543974835 |

The key information exchanged between node A and B can comprise the Key IDs "KeyA1", "KeyA2" and "KeyA3". In this manner, the node B knows that that the keys corresponding to the IDs "Key1" and "Key2" can be used for the establishment of the encrypted channel.

Moreover, the method 5000 can also comprise an exchange step 5005 for exchanging the key selected by the node B. Generally, in this step, node B informs node A on the key selected for the establishment of the encrypted channel, by selecting one encryption key among those identified by the key information received from the node A. This can be achieved by node B by sending a respective key information to node A.

Further, the method 5000 can also comprise a quantum-safe encryption establishment step 5007 in which the encryption between the nodes A and B is established based on the key selected by node B at step 5006.

In other words, by means of method 5000, any node A, B, C can securely communicates with the quantum key distribution system 2510, 4510 in order to have access to encryption keys which are also available to another node A, B, C, either on the same quantum key distribution system 2510, 4510 or on a different quantum key distribution system 2510, 4510. Depending on the security policy, the nodes A, B, C may use the a quantum encryption to securely communicate. Alternatively they may decide to operate in a legacy mode. The implementation of the security policy can be left to the first node requesting the connection, or can be left to the second node, responding to the request. Alternatively, or in addition, in a slave/master mode, such as a client/server mode, the implementation of the security policy can be left to either the slave or the master.

The security policy thereby defines the level of security in accordance with a set of criteria and parameters, such as the attack mode, or the client profile. For instance, if high attack mode resistance is desired, then the security policy can request the implementation of the encryption based on the encryption keys exchanged provided by the quantum key distribution systems 2510, 4510. Still for instance, a predetermined security policy can be associated with a predetermined user profile, such as administrator, end-user, participant etc. In some embodiments, the security policy, which may be configured beforehand, is dynamically applied by one node, for instance node B, or a server, while authenticating another node, for instance node A or C, or a client.

In some embodiments the authentication can be achieved thanks to the node requesting the connection, issuing a first handshake message. If node responding to the request considers the quantum layer security unnecessary, the legacy mode, as defined for instance in TLS version 1.3, is used. Otherwise, the quantum key distribution system 2510, 4510 can be contacted by the respective nodes A, B, C so as to provide them with the appropriate quantum-exchange encryption keys. Those keys can then be used to encrypt the channel between the nodes. In some embodiments the channel is encrypted solely based on the encryption keys retrieved from the quantum key distribution systems, in some other embodiments the encryption also makes use of the legacy approach, in addition to the encryption keys retrieved from the quantum key distribution systems.

In some embodiments the nodes A, B, C communicate between each other through application protocols over TCP channels. In order to provide a secure channel 1300 between the communicating parties, they can employ different protocols, among which the TLS protocol. Using this protocol, the channel provides authentication, confidentiality, and integrity. The most recent specification of the standard TLS protocol, version 1.3, can be found on the following webpage: https://tlswg.github.io/tls13-spec/ which is herewith enclosed by reference, in its entirety.

TLS is an application-layer protocol independent and higher-level protocols can layer on top of TLS transparently. The two primary components of existing TLS protocol are:
- a Handshake protocol aimed at negotiating the cryptographic parameters, and establishing the shared material;
- a Record protocol aimed at protecting the traffic between the communicating parties by employing the parameters established through the Handshake protocol.

In some embodiments, the TLS protocol, which handles communication security among the network of nodes A, B, C, can further integrates a functionality to allow operation with encryption keys provided by quantum key distribution systems, such as quantum key distribution system 2510, 4510. This allows to further secure the communications between the nodes A, B, C. The TLS protocol embedding the quantum key operation will be referred to a TLS-QKD in the following, to distinguish it from the current TLS.

The integration of the additional quantum keys can be achieved by modifying the field "psk_key_exchange_modes" of the existing TLS 1.3 specification and by adding a new field "qsk-pre-shared-key".

The field "psk_key_exchange_modes" currently support two values namely "psk-ke" which only uses psk and psk-dhe-ke, which combines psk with Diffie-Hellman. The absence of this field indicates the exclusive use of Diffie-Hellman. In the modified "psk_key_exchange_modes" additional values are supported for indicating that the node can support encryption based on the quantum encryption keys and/or can support encryption based on the legacy approach in combination with the quantum encryption keys. In some embodiments the added values can therefore be one, for indicating an approach based on the quantum encryption keys only, or more, for also indicating an encryption approach based on the quantum encryption keys combined with psk and/or combined with Diffie Helmann. By adding further values to the "psk_key_exchange_modes" it is therefore possible to allow nodes A, B, C to set up encrypted logical channels 1300 at the TLS level.

In some more specific embodiments, the "psk_key_exchange_modes" field can be associated to up to three more possible values, which express the ability to implement an encrypted channel based on the quantum keys, based on the quantum keys combined with a legacy approach, such as pre-shared_key, or with both a pre-shared_key extension and a (EC)DHE key establishment procedure. Such additional fields allow the new TLS-QKD protocol to supplementary make use of quantum encryption keys, while maintaining complete compatibility to previous versions of TLS and thereby support legacy devices.

In this manner it is possible to obtain a TLS-QKD protocol for establishing an encrypted channel between a first node A and a second node B in a network 2000, 3000, wherein the field "psk_key_exchange_modes" of the TLS protocol comprises more than two possible values, preferably more than three possible values, even more preferably more than four possible values, still more preferably six possible values.

A possible detailed implementation of the new "psk_key_exchange_modes" can be defined formally as:

```
      enum {psk_ke(0), psk_dhe_ke(1), qsk_ke(2), qsk_psk_ke(3), qsk_dhe_ke(4),
      qsk_psk_dhe_ke(5), (255) };
```

where the values psk_ke(0) and psk_dhe_ke(1) are currently present in TLS version 1.3, while one or more of values qsk_ke(2), qsk_psk_ke(3), qsk_dhe_ke(4), qsk_psk_dhe_ke(5) can be added, indicating respectively support for quantum encryption only, support for quantum encryption in combination with psk, support for quantum encryption in combination with Diffie Helmann and support for quantum encryption in combination with psk and Diffie Helmann.

It should be noted that this new implementation does not exceed the maximal value of the enumeration, 255 in this case. Thus the added values for the "psk_key_exchange_modes" do not need any modification of the TLS protocol at the frame size level. In some embodiments, in accordance with the TLS version 1.3, the node A, B, C can send the "psk_key_exchange_modes" information in its ClientHello message.

In some additional embodiments, a new field can also be added for communicating the quantum encryption keys identifiers, also described as information related to at least one encryption key in the present description, which will be named here as "qsk_key_share". It will be clear however that any name for this field can be implemented. The functionality of the field, namely the transmission of quantum encryption keys identifiers, is relevant to the invention. The "qsk_key_share"field can be used for communicating the quantum encryption keys identifiers between the quantum key distribution system 2510, 4510 and the node A, B, C connected to it, as well as between any two nodes A, B, C.

In some implementations, the node A, B, C can also appends to its ClientHello message the "qsk_key_share"field.lf the responding node A, B, C elects to use quantum encryption security, it can then sendback its own "qsk_key_share" field, thereby implementing the method 5000 described above.

In some specific embodiments, the "qsk_key_share" can formally be defined as:

```
       struct {
       select (Handshake.msg_type) {
       case client_hello:
       QuantumKeyShareEntry_client_shares<0..2^16-1>;
       case server_hello:
       Quantum KeyShareEntry server share;
       };
       } qskKeyShare;
       struct {
       opaque quantum_key_id <1..2^16-1>;
       } QuantumKeyShareEntry;
```

Here the "client_shares"identifies a vector comprising a list of offered quantum encryption keys identifiers, here referred to as "Quantum KeyShareEntry", preferably in descending order of preference from the point of view of the issuing node. In some embodiments the TLS-QKD protocol can be configured so as to specify that this vector must have a size different from 0.

The "server_share" identifies a single QuantumKeyShareEntry value that is in list defined by "client_shares".

The "quantum_key_id" represents an identifier for a quantum key, such as, for instance, KeyA1, KeyA2, KeyA3 defined above. The contents of this field can generally be a bit string that uniquely identifies a quantum key available at the quantum key distribution system 2510, 4510 of the sender.

In some embodiments, the protocol is furthermore advantageously applicable to the new 0-RTT feature of TLS version 1.3. As in the TLS protocol version 1.3, the node A can send encrypted data, using a key computed in the same way as specified before, along with the original and additional data and parameters. However, the security properties for 0-RTT data in this case are stronger than those for the original 0-RTT TLS data. In particular, this data is still forward secure, as it is encrypted under keys that are derived from quantum encryption keys that can only be used once. Moreover, replay attacks between connections are still impossible because of the randomness provided by each one-time quantum encryption keys.

According to the current specification 1.3 of the TLS protocol, a TLS implementation has to ignore any field it does not recognize. This makes the implementation of the invention particularly advantageous, since a node running a legacy TLS protocol will still be capable of communicating with a node running the TLS-QKD. That is, in some embodiments, the added fields can simply be discarded by the legacy node, which makes the added fields transparent to any legacy instance of TLS implementation and guarantees the backwards compatibility of the new TLS-QKD.

Although several embodiments have been described independently of each other in the description above, it will be clear that they can be combined in additional embodiments of the invention. The quantum key distribution system 2510, 4510 can, for instance, implement the novel TLS-QKD protocol. Similarly, the method 5000 can also make use of the novel TLS-QKD protocol.

### List of reference numerals

Figure 1A
   1000A: network
   A: node
   B: node
   1100: upper OSI layer
   1200: lower OSI layer
   1300: logical channel
   1400: physical channel
Figure 1B
   1000B: network
   1500: quantum encryption device
   1510: quantum key distribution system
   1520: encryption engine
   1600: physical quantum channel
Figure 2
   2000: network
   2510: quantum key distribution system
   2700: physical channel
   2800: logical channel
Figure 3
   3000: network
   C: node
Figure 4
   4510: quantum key distribution system
   4530: physical port
   4540: controller
   4550: memory
   4560: physical quantum port
Figure 5
   5000: encrypted channel establishment
   5001: start
   5002: encryption key exchange
   5003: key information exchange
   5004: encryption level decision
   5005: key information mapping
   5006: selected key exchange
   5007: quantum-safe encryption establishment
   5008: legacy encryption establishment
   5009: end

## Claims

1. An encrypted channel establishment method (5000) for establishing an encrypted channel between a first node (A) and a second node (B) in a network (2000, 3000) deploying a TLS protocol comprising the steps of:
exchanging (5002) at least one first encryption key over a quantum physical channel (1600) by a first quantum key distribution system (2510, 4510) connected to the first node (A) and by a second quantum key distribution system (2510, 4510) connected to the second node (B),
**characterized by**
exchanging (5003) quantum encryption keys identifiers between the first node (A) and the second node (B) using a modified TLS protocol comprising a field for said quantum encryption keys identifiers, wherein the quantum encryption keys identifiers at least identifies the at least one first encryption key,
deciding (5004) at the second node (B) what level of encryption to use for the encrypted channel among at least a first encryption level, based on the first encryption key, and a second encryption level, established in a legacy TLS encryption establishment step, based on a second encryption key, exchanged over a physical channel (1400) different from the quantum physical channel (1600).

2. The encrypted channel establishment method (5000) according to claim 1, wherein
if, at the deciding step (5004), the second node (B) decides to use the first encryption level, the encrypted channel is established based on the at least first encryption key.

3. The encrypted channel establishment method (5000) according to claim 1 or 2, wherein the step of exchanging (5003) the quantum encryption keys identifiers comprises exchanging the quantum encryption keys identifiers between the first quantum key distribution system (2510, 4510) and the first node (A) by an application running in at least one upper OSI layer (1100) of the first node (A).

4. The encrypted channel establishment method (5000) according to claim 3, wherein the upper OSI layer comprises one or more of OSI layers 4 to 7, preferably one or more of OSI layers 5 to 7, more preferably one or more of OSI layers 6 and 7.

5. The encrypted channel establishment method (5000) according to claim 3 or 4, wherein the application comprises Transport Layer Security protocol.

6. The encrypted channel establishment method (5000) according to claim 1 to 5 further comprising the steps of
mapping (5005) the quantum encryption keys identifiers at the second node (B) by mapping the quantum encryption keys identifiers against at least one third encryption key stored in the second quantum key distribution system (2510, 4510).

7. A TLS protocol for establishing an encrypted channel between a first node (A) and a second node (B) in a network (2000, 3000) by exchanging encryption keys over a physical quantum channel (1600),
**characterized in that** the field psk_key_exchange_modes of the TLS protocol comprises more than two possible values, preferably more than three possible values, even more preferably more than four possible values, still more preferably six possible values,
and **in that** the TLS protocol further comprises a field for transmitting quantum encryption keys identifiers.

## Patentansprüche

1. Verfahren zum Aufbau eines verschlüsselten Kanals (5000) zum Aufbau eines verschlüsselten Kanals zwischen einem ersten Knoten (A) und einem zweiten Knoten (B) in einem Netzwerk (2000, 3000) das ein TLS-Protokoll einsetzt, mit den folgenden Schritten:
Austauschen (5002) mindestens eines ersten Verschlüsselungsschlüssels über einen quantenphysikalischen Kanal (1600) durch ein erstes Quantenschlüsselverteilungssystem (2510, 4510), das mit dem ersten Knoten (A) verbunden ist, und durch ein zweites Quantenschlüsselverteilungssystem (2510, 4510) das mit dem zweiten Knoten (B) verbunden ist,
**gekennzeichnet durch**
Austauschen (5003) von Quantenverschlüsselungsschlüssel-Kennungen zwischen dem ersten Knoten (A) und dem zweiten Knoten (B) unter Verwendung eines modifizierten TLS-Protokolls, das ein Feld für die Quantenverschlüsselungsschlüssel-Kennungen umfasst, wobei die Quantenverschlüsselungsschlüssel-Kennungen zumindest den mindestens einen ersten Verschlüsselungsschlüssel identifizieren,
Entscheiden (5004) am zweiten Knoten (B) welcher Verschlüsselungsgrad für den verschlüsselten Kanal zu verwenden ist, zwischen mindestens einem ersten Verschlüsselungsgrad, basierend auf dem ersten Verschlüsselungsschlüssel, und einem zweiten Verschlüsselungsgrad, der in einem Legacy-TLS-Verschlüsselungseinrichtungsschritt eingerichtet wird, basierend auf einem zweiten Verschlüsselungsschlüssel, der über einen physikalischen Kanal (1400) ausgetauscht wird, der sich von dem quantenphysikalischen Kanal (1600) unterscheidet.

2. Das Verfahren zum Aufbau eines verschlüsselten Kanals (5000) nach Anspruch 1, wobei
wenn, bei dem Entscheidungsschritt (5004), der zweite Knoten (B) entscheidet, den ersten Verschlüsselungsgrad zu verwenden, der verschlüsselte Kanal auf der Grundlage des mindestens ersten Verschlüsselungsschlüssels aufgebaut wird.

3. Das Verfahren zum Aufbau eines verschlüsselten Kanals (5000) nach Anspruch 1 oder 2, wobei der Schritt des Austauschs (5003) der Quantenverschlüsselungsschlüssel-Kennungen den Austausch der Quantenverschlüsselungsschlüssel-Kennungen zwischen dem ersten Quantenschlüsselverteilungssystem (2510, 4510) und dem ersten Knoten (A) durch eine Anwendung umfasst, die in mindestens einer oberen OSI-Schicht (1100) des ersten Knotens (A) läuft.

4. Das Verfahren zum Aufbau eines verschlüsselten Kanals (5000) nach Anspruch 3, wobei
die obere OSI-Schicht eine oder mehrere der OSI-Schichten 4 bis 7, vorzugsweise eine oder mehrere der OSI-Schichten 5 bis 7, besonders bevorzugt eine oder mehrere der OSI-Schichten 6 und 7 umfasst.

5. Das Verfahren zum Aufbau eines verschlüsselten Kanals (5000) nach Anspruch 3 oder 4, wobei die Anwendung das Transport Layer Security Protokoll umfasst.

6. Das Verfahren zum Aufbau eines verschlüsselten Kanals (5000) nach einem der Ansprüche 1 bis 5, welches die folgenden Schritte ferner umfasst:
Mapping (5005) der Quantenverschlüsselungsschlüssel-Kennungen am zweiten Knoten (B) durch Mapping der Quantenverschlüsselungsschlüssel-Kennungen gegen mindestens einen dritten Verschlüsselungsschlüssel, der im zweiten Quantenschlüsselverteilungssystem (2510, 4510) gespeichert ist.

7. TLS-Protokoll zum Aufbau eines verschlüsselten Kanals zwischen einem ersten Knoten (A) und einem zweiten Knoten (B) in einem Netzwerk (2000, 3000) durch Austausch von Verschlüsselungsschlüsseln über einen quantenphysikalischen Kanal (1600),
**dadurch gekennzeichnet,**
**dass** das Feld psk_key_exchange_modes des TLS-Protokolls mehr als zwei mögliche Werte, vorzugsweise mehr als drei mögliche Werte, noch mehr bevorzugt mehr als vier mögliche Werte, noch mehr bevorzugt sechs mögliche Werte, umfasst,
und **dass** das TLS-Protokoll ferner ein Feld zum Übertragen von Quantenverschlüsselungsschlüssel-Kennungen umfasst.

## Revendications

1. Un procédé d'établissement de canal crypté (5000) pour établir un canal crypté entre un premier nœud (A) et un deuxième nœud (B) dans un réseau (2000, 3000) déployant un protocole TLS comprenant des étapes pour:
échanger (5002) au moins une première clé de chiffrement sur un canal physique quantique (1600) par un premier système de distribution de clés quantiques (2510, 4510) connecté to au premier nœud (A) et par un deuxième système de distribution de clés quantiques (2510, 4510) connecté au deuxième nœud (B),
**caractérisé par**
échanger (5003) des identifiants de clés de cryptage quantiques entre le premier nœud (A) et le deuxième nœud (B) en utilisant un protocole TLS modifié comprenant un champ pour lesdits identifiants de clés de cryptage quantiques, dans lequel les identifiants de clés de cryptage quantiques identifient au moins la au moins une première clé de chiffrement,
décider (5004) au deuxième nœud (B) quel niveau de cryptage utiliser pour le canal crypté parmi au moins un premier niveau de cryptage, basé sur la première clé de chiffrement, et un deuxième niveau de cryptage, établi dans une étape d'établissement de cryptage TLS legacy, basé sur une deuxième clé de chiffrement, échangée sur un canal physique (1400) différent du canal physique quantique (1600).

2. Le procédé d'établissement de canal crypté (5000) selon la revendication 1, dans lequel
si, à l'étape de décider (5004), le deuxième nœud (B) décide d'utiliser le premier niveau de cryptage, le canal crypté est établi sur la base de la au moins une première clé de chiffrement.

3. Le procédé d'établissement de canal crypté (5000) selon la revendication 1 ou 2, dans lequel l'étape de échanger (5003) les identifiants de clés de cryptage quantiques comprend échanger les identifiants de clés de cryptage quantiques entre le premier système de distribution de clés quantiques (2510, 4510) et le premier nœud (A) par une application s'exécutant dans au moins une couche OSI supérieure (1100) du premier nœud (A).

4. Le procédé d'établissement de canal crypté (5000) selon la revendication 3, dans lequel
la couche OSI supérieure comprend une ou plusieurs des couches OSI 4 à 7, de préférence une ou plusieurs des couches OSI 5 à 7, plus préférablement une ou plusieurs des couches OSI 6 et 7.

5. Le procédé d'établissement de canal crypté (5000) selon la revendication 3 ou 4, dans lequel l'application comprend le protocole Transport Layer Security.

6. Le procédé d'établissement de canal crypté (5000) selon l'une des revendications 1 à 5 comprenant en outre les étapes de
mapper (5005) les identifiants de clés de cryptage quantiques au deuxième nœud (B) en mappant les identifiants de clés de cryptage quantiques par rapport à au moins une troisième clé de chiffrement stockée dans le deuxième système de distribution de clés quantiques (2510, 4510).

7. Un protocole TLS pour établir un canal crypté entre un premier nœud (A) et un deuxième nœud (B) dans un réseau (2000, 3000) en échangeant des clés de chiffrements sur un canal quantique physique (1600),
**caractérisé en ce que**
le champ psk_key_exchange_modes du protocole TLS comprend plus de deux valeurs possibles, de préférence plus de trois valeurs possibles, encore plus préférablement plus de quatre valeurs possibles, encore plus préférablement six valeurs possibles,,
et **en ce que** le protocole TLS comprend en outre un champ pour transmettre des identifiants de clés de cryptage quantiques.
